# EUROPEAN PATENT APPLICATION

(11) **EP 4 322 138 A1**
(43) Date of publication of application: **14.02.2024**
(21) Application number: 22851618.3
(22) Date of filing: 22.04.2022
(51) Int. Cl.: G09F 9/30

(54) **FOUR-SIDED BEZEL-FREE FULL SCREEN STRUCTURE**

(30) Priority: 06.08.2021 CN 202121839477 U
(71) Applicant: Shenzhen TCL Digital Technology Ltd., Shenzhen, Guangdong 518054 (CN)
(72) Inventor: LIU, Jianguo, Hong Kong Cooperation Zone No.1 Liyumen Street, Qianwan Road 1 Shenzhen, Guangdong 518054 (CN)
(74) Representative: Petraz, Gilberto Luigi
(86) International application number: PCT/CN2022/088475
(87) International publication number: WO 2023/010896

(57) **Abstract**

A four-sided bezel-free full screen (100), comprising a display screen module (10), a decorative piece (20), a connecting piece (30), and a lower front screen frame (40). The display screen module (10) comprises a display screen (101), wherein a first end (201) of the decorative piece (20) is fixed onto the front surface of the display screen (101) by means of the connecting piece (30), and a second end (202) of the decorative piece (20) is arranged on the lower front screen frame (40). One end (201) of the decorative piece (20) is arranged on the front surface of the display screen (101), and the other end (202) is arranged on the lower front screen frame (40), so that an exposed portion of the lower part of the display screen (101) is covered by means of the decorative piece (20) so as to achieve a four-sided bezel-free full screen (100), while also preventing dust from entering the interior of the display screen module (10) from the exposed portion of the lower part of the display screen (101), and preventing light leakage of the display screen (101).

## Description

This application claims priority to Chinese Utility Model Patent Application No. CN202121839477.0, filed on August 6, 2021, entitled "FOUR-SIDED BEZEL-FREE FULL SCREEN STRUCTURE", which is incorporated herein by reference in its entirety.

### TECHNICAL FIELD

The present application relates to the technical field of display devices, and more particularly, to a four-sided bezel-free full screen structure.

### BACKGROUND

Currently, the display device is gradually developed for the tendency on full-screen to meet consumer's demands on appearance of a product. As a further improvement for a three-sided bezel-free full screen structure, a four-sided bezel-free full screen structure is defined by removing a lower side of a display device, so as to increase screen proportion as much as possible. However, the four-sided bezel-free full screen structure has problems in that a liquid crystal screen structure on the lower side cannot be hidden, resulting in an unattractive appearance, light leakage and non-dustproof.

Accordingly, the existing technology has drawbacks that need to be improved and developed.

### SUMMARY OF THE APPLICATION

### TECHNICAL PROBLEM

An embodiment of the present application provides a four-sided full-screen structure. By arranging an end of a decorative member on a front surface of a display screen and another end of the decorative member on a lower front frame of the display screen, an exposed portion at the lower side of the display screen can be hidden by the decorative member, thereby improving a four-side full-screen design.

### SOLUTIONS TO THE TECHNICAL PROBLEM

### TECHNICAL SOLUTION

An embodiment of the present application provides a four-sided bezel-free full screen including a display screen module, a decorative member, a connecting member, and a lower front frame;
wherein the display screen module includes a display screen, a first end of the decorative member is fixed to a front surface of the display screen by the connecting member; and
a second end of the decorative piece is disposed on the lower front frame.

In the four-sided bezel-free full screen according to an embodiment of the present application, the display screen includes an upper polarizer, and the first end of the decorative member is fixed to the upper polarizer by the connecting member.

In the four-sided bezel-free full screen according to an embodiment of the present application, the full-screen further includes a seal, the seal is disposed on the lower front frame and between the decorative member and the lower front frame.

In the four-sided bezel-free full screen according to an embodiment of the present application, a projection is provided on a side of the lower front frame close to the display screen, the second end of the decorative member is provided on the projection, and the seal is disposed on the projection and between the decorative member and the projection.

In the four-sided bezel-free full screen according to an embodiment of the present application, the seal is made of soft material.

In the four-sided bezel-free full screen according to an embodiment of the present application, the seal is made of sponge.

In the four-sided bezel-free full screen according to an embodiment of the present application, the display screen is a VA liquid crystal screen.

In the four-sided bezel-free full screen according to an embodiment of the present application, the connecting member is a double-sided adhesive tape.

In the four-sided bezel-free full screen according to an embodiment of the present application, a thickness of the decorative member ranges from 0.1 mm to 1 mm.

In the four-sided bezel-free full screen according to an embodiment of the present application, the decorative member is made of stainless steel.

An embodiment of the present application further provides a four-sided bezel-free full screen, including a display screen module, a decorative member, and a lower front frame;
the display screen module includes a display screen, a first end of the decorative member is fixed to a front surface of the display screen; and
a second end of the decorative piece is disposed on the lower front frame.

In the four-sided bezel-free full screen according to an embodiment of the present application, the full-screen further includes a connecting member, and the first end of the decorative member is fixed to the front surface of the display screen by the connecting member.

In the four-sided bezel-free full screen according to an embodiment of the present application, the display screen includes an upper polarizer, and the first end of the decorative member is fixed to the upper polarizer by the connecting member.

In the four-sided bezel-free full screen according to an embodiment of the present application, the full-screen further includes a seal, the seal is disposed on the lower front frame and between the decorative member and the lower front frame.

In the four-sided bezel-free full screen according to an embodiment of the present application, a projection is provided on a side of the lower front frame close to the display screen, the second end of the decorative member is provided on the projection, and the seal is disposed on the projection and between the decorative member and the projection.

In the four-sided bezel-free full screen according to an embodiment of the present application, the seal is made of soft material.

In the four-sided bezel-free full screen according to an embodiment of the present application, the seal is made of sponge.

In the four-sided bezel-free full screen according to an embodiment of the present application, the display screen is a VA liquid crystal screen.

In the four-sided bezel-free full screen according to an embodiment of the present application, the connecting member is a double-sided adhesive tape.

In the four-sided bezel-free full screen according to an embodiment of the present application, the decorative member is made of stainless steel, and a thickness of the decorative member ranges from 0.1 mm to 1 mm.

### BENEFICIAL EFFECT OF THE APPLICATION

### BENEFICIAL EFFECT

An embodiment of the present application provides a four-sided full-screen structure. By arranging an end of a decorative member on a front surface of a display screen and another end of the decorative member on a lower front frame of the display screen, an exposed portion at the lower side of the display screen can be hidden by the decorative member, thereby improving a four-side full-screen design. At the same time, a seal is provided to prevent dust from entering the interior of the display screen module from the lower side of the display screen, and to prevent a light leakage, in a case that a tolerance on component is defined between the decorative member and the lower front frame of the display screen, or a tolerance on assembly is defined between the decorative member and the lower front frame of the display screen.

### BRIEF DESCRIPTION TO THE DRAWINGS

### DESCRIPTION OF THE DRAWINGS

In order that the technical solution in the embodiments of the present application may be explained more clearly, a brief description is given below with the drawings required for use in the embodiments. It should be understood that the drawings in the following description are merely for some embodiments of the present application, and other drawings may be obtained by those skilled in the art without involving any inventive effort.
FIG. 1 is a schematic structural diagram of a four-sided bezel-free full screen according to an embodiment of the present application.
FIG. 2 is another schematic structural diagram of a four-sided bezel-free full screen according to an embodiment of the present application.
FIG. 3 is yet another schematic structural diagram of a four-sided bezel-free full screen according to an embodiment of the present application.

### DETAILED DESCRIPTION OF THE EMBODIMENTS

The technical solution in the embodiments of the present application is clearly and completely described with reference to the accompanying drawings. It should be understood that the described embodiments are only part of the examples of the present application, instead of all examples. Based on the embodiments in the present application, all other embodiments obtained by a person skilled in the art without involving any inventive effort are within the scope of the present application.

In the description of this application, it should be understood that the azimuth or positional relationship indicated by the terms "center", "longitudinal", "transverse", "length", "width", "thickness", "up", "down", "front", "back", "left", "right", "vertical", "horizontal", "top", "bottom", "inner", "outer", "clockwise", "counterclockwise", and the like, is based on the azimuth or positional relationship shown in the drawings, merely to facilitate the description of this application and to simplify the description, and is not intended to indicate or imply that the device or element referred to must have a particular azimuth, be constructed and operated in a particular azimuth. Therefore, the above term is not to be construed as limiting the application. Furthermore, the terms "first" and "second" are used for descriptive purposes only and are not to be construed as indicating or implying relative importance or implying the number of indicated technical features. The features defined with the terms "first" and "second" explicitly or implicitly have a number of one or more. In the description of this application, "a plurality of" means two or more, unless expressly and specifically defined otherwise.

In the description of the present application, it is to be noted that, unless expressly stated and defined otherwise, the terms "mount", "linked", "connected" are to be understood in a broad sense, for example, as a fixed connection, as a detachable connection, or as an integrated connection. It may be mechanically connected, electrically connected or in communication with each other. It may be directly connected, or indirectly connected by means of an intermediate medium, or may be internal communication of the two elements or interaction of the two elements. The specific meaning of the above terms in this application may be understood by one of ordinary skill in the art depending on the specific circumstances.

In the description of the present application, it is to be noted that, unless expressly stated and defined otherwise, the expression that the first feature is "on" or "under" the second feature may include direct contact of the first and second features, as well as contact of the first and second features by additional features therebetween. Moreover, the expression that the first feature is "on", "above", and "over" the second feature may include that the first feature is directly above and obliquely above the second feature, or merely indicate that the first feature level is higher than the second feature. The expression that the first feature is "under", "below", and "underneath" the second feature may include the first feature directly below and obliquely below the second feature, or merely indicate that the first feature level is less than the second feature.

The following disclosure provides many different embodiments or examples for implementing the different structures of the present application. In order to simplify the disclosure of the present application, components and arrangements of specific examples are described below. It should be understood that the embodiments described are merely examples and are not intended to limit the application. In addition, the present application may use the same reference numerals and/or reference letters in various examples, for the purpose of simplicity and clarity, without itself indicating a relationship between the various embodiments and/or arrangements discussed. In addition, the present application provides examples of various specific processes and materials, but one of ordinary skill in the art could recognize the application of other processes and/or the use of other materials.

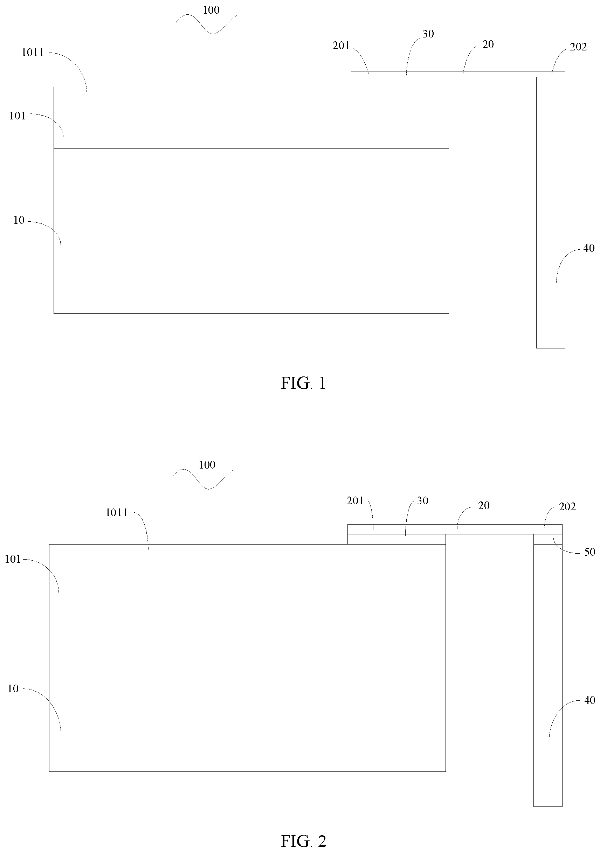

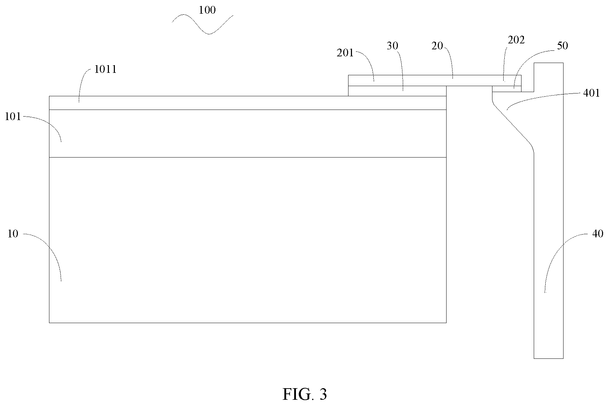

An embodiment of the present application provides a four-sided bezel-free full screen 100. Referring to FIG. 1 to FIG. 3, the four-sided bezel-free full screen 100 includes a display screen module 10, a decorative member 20, a connecting member 30, and a lower front frame 40.

Here, the lower front frame 40 is the front frame on the lower side of the screen, and is disposed below the display screen module.

The display screen module 10 includes a display screen 101, and a first end 201 of the decorative member 20 is fixed to a front surface of the display screen 101 through the connecting member 30.

The front surface of the display screen refers to the side of the display screen facing to the user when the user watches the display screen.

A second end 202 of the decorative member 20 is disposed on the lower front frame 40. By arranging an end (first end 201) of the decorative member 20 on the front surface of the display screen 101 and another end (second end 202) of the decorative member 20 on the lower front frame 40 of the display screen, the exposed portion at the lower side of the display screen 101 is hidden by the decorative member 20, so that a four-side full-screen design is improved. At the same time, dust can be prevented from entering the interior of the display screen module 10 from the exposed portion at the lower side of the display screen 101, and light leakage of the display screen can be prevented. Based on this design, the height difference in design between the decorative member 20 and the display screen 101 is only 0.4 mm, so as to provide a better overall appearance for the full-screen.

In some embodiments, the display screen 101 includes an upper polarizer 1011, and the first end 201 of the decorative member 20 is secured to the upper polarizer 1011 through the connecting member 30.

The upper polarizer is a polarizer for polarizing lights. The imaging of the liquid crystal display depends on polarizing lights. All the liquid crystals have front and rear polarizers attached to the liquid crystal glass so as to form a liquid crystal wafer with a total thickness of about 1 mm. If any of the front and rear polarizers is absent, the liquid crystal wafer cannot display an image. The upper polarizer 1011 is a polarizer located on the front surface of the display screen 101. In this design, the height difference in design between the decorative member 20 and the upper polarizer 1011 is only 0.4 mm, so as to provide a better overall appearance for the full-screen.

In some embodiments, the four-sided bezel-free full screen 100 further includes a seal 50, and the seal 50 is disposed on the lower screen front frame 40 and between the decorative member 20 and the lower front frame 40.

In this embodiment, the four-sided bezel-free full screen 100 further includes the seal 50, and the seal 50 is disposed on the lower front frame 40 and between the decorative member 20 and the lower front frame 40, to prevent dust from entering the interior of the display screen module 10 from the exposed portion at the lower side of the display screen 101 and to prevent light leakage of the display screen 101, in a case that a tolerance on component is defined between the decorative member 20 and the lower front frame 40, or a tolerance on assembly is defined between the decorative member 20 and the lower front frame 40.

In some embodiments, a projection 401 is provided on a side of the lower front frame 40 close to the display screen 101. The second end 202 of the decorative member 20 is disposed on the projection 401. The seal 50 is provided on the projection 401, and is disposed between the decorative member 20 and the projection 401.

The projection 401 is provided on a side of the lower front frame 40 close to the display screen 101, to dispose the second end 202 of the decorative member 20 on the projection 401, so that the four-sided bezel-free full screen 100 is provided with a better appearance.

In some embodiments, the seal 50 is made of soft material.

The soft material is selected for the seal 50, and the seal 50 is disposed between the decorative member 20 and the lower front frame 40, to prevent the dust from entering the interior of the display screen module 10 from the exposed portion at the lower side of the display screen 101 and to prevent light leakage of the display screen 101, in a case that a tolerance on component is defined between the decorative member 20 and the lower front frame 40, or a tolerance on assembly is defined between the decorative member 20 and the lower front frame 40. Further, the soft material has a compressibility for better filling the gap between the decorative member 20 and the lower front frame 40, thereby preventing the light leakage and providing dustproof.

In some embodiments, the seal 50 is made of sponge.

The sponge is a relatively good soft material, which can well fill the gap between the decorative member 20 and the lower front frame 40. As such, the light leakage is well prevented and a better dustproof is provided.

In some embodiments, the display screen 101 is a vertical alignment (VA) liquid crystal screen.

The VA liquid crystal screen includes an upper polarizer, a color filter glass, a TFT glass, and a lower polarizer along a direction from the exterior of the VA liquid crystal screen to the interior of the VA liquid crystal screen.

In some embodiments, the connecting member 30 is a double-sided adhesive tape.

For an ease connection and assembly process, the double-sided adhesive tape is used as the connecting member 30. In addition, the double-sided adhesive tape is used as the connecting member 30 to connect the decorative member 20 and the display screen 101, thus, no need is required to equip the dispensing device and the precision bonding device, thereby decreasing the investment on equipment and process development, and saving costs. It should be noted that the connecting member 30 is not limited to a double-sided adhesive tape, and a person skilled in the art can select an appropriate connecting member according to actual conditions, which is not specifically limited herein.

In some embodiments, the thickness of the double-sided adhesive tape ranges from 0.1 mm to 0.5 mm, and preferably 0.2 mm.

It should be noted that the double-sided adhesive tape needs to be compatible with the upper polarizer 1011 and the decorative member 20 in order to ensure the reliability on connection. In addition, the double-sided adhesive tape needs to be extremely thin and extensible to provide the relative misalignment between the decorative member 20 and the upper polarizer 1011 due to the inconsistency of the linear expansion coefficient, so as to ensure the reliability on connection. The double-sided adhesive tape may be selected from the type of 3M55260.

In some embodiments, the thickness of the decorative member 20 ranges from 0.1 mm to 1 mm.

The decorative member 20 is a decorative strip with the thickness ranging from 0.1 mm to 1 mm, and preferably 0.2 mm. The material of the decorative member 20 is extremely thin and has a certain impact resistance, to serve as protection. In addition, the linear expansion coefficient of the decorative strip needs to be similar to the linear expansion coefficient of the glass.

In some embodiments, the decorative member 20 is made of stainless steel.

It should be noted that the material of the decorative member 20 is not limited to the stainless steel, and a person skilled in the art can select a suitable decorative member according to actual conditions, which is not specifically limited herein. For example, plastic or other metallic material can be selected to make the decorative member 20.

An embodiment of the present application provides a four-sided bezel-free full screen 100. The four-sided bezel-free full screen 100 includes a display screen module 10, a decorative member 20, a connecting member 30, and a lower front frame 40. The display screen module 10 includes a display screen 101, a first end 201 of the decorative member 20 is fixed to a front surface of the display screen 101 through the connecting member 30, and the second end 202 of the decorative member 20 is disposed on the lower front frame 40. According to an embodiment of the present application, an end (the first end 201) of the decorative member 20 is provided on the front surface of the display screen 101, and another end (the second end 202) is provided on the lower front frame 40, so that the exposed portion at the lower side of the display screen is hidden by the decorative member 20, thereby improving a four-sided bezel-free full screen design. At the same time, in a case that a tolerance on component is defined between the decorative member 20 and the lower front frame 40, or a tolerance on assembly is defined between the decorative member 20 and the lower front frame 40, the seal 50 can prevent dust from entering the interior of the display screen module 10 from the exposed portion at the lower side of the display screen 101, and can prevent light leakage of the display screen 101.

In the above-mentioned embodiments, the description of each embodiment has its own emphasis, and parts not described in detail in a certain embodiment may be referred to the related description of other embodiments.

The present application has been described in detail with reference to a four-sided bezel-free full screen according to an embodiment of the present application. Specific examples are used to illustrate the principles and embodiments of the present application. The description of the above embodiments is merely intended to help understand the technical solution of the present application and the core idea thereof. It should be understood by those of ordinary skill in the art that modifications may still be made to the technical solutions described in the foregoing embodiments, or equivalents may be made to some of the technical features therein. These modifications or equivalents do not depart the essence of the corresponding technical solutions from the scope of the technical solutions of the embodiments of the present application.

## Claims

1. A four-sided bezel-free full screen, comprising a display screen module, a decorative member, a connecting member, and a lower front frame;
wherein the display screen module comprises a display screen, a first end of the decorative member is fixed to a front surface of the display screen by the connecting member; and
a second end of the decorative piece is disposed on the lower front frame.

2. The four-sided bezel-free full screen of claim 1, wherein the display screen comprises an upper polarizer, and the first end of the decorative member is fixed to the upper polarizer by the connecting member.

3. The four-sided bezel-free full screen of claim 1, wherein the full-screen further comprises a seal, the seal is disposed on the lower front frame and between the decorative member and the lower front frame.

4. The four-sided bezel-free full screen of claim 3, wherein a projection is provided on a side of the lower front frame close to the display screen, the second end of the decorative member is provided on the projection, and the seal is disposed on the projection and between the decorative member and the projection.

5. The four-sided bezel-free full screen of claim 3, wherein the seal is made of soft material.

6. The four-sided bezel-free full screen of claim 5, wherein the seal is made of sponge.

7. The four-sided bezel-free full screen of claim 1, wherein the display screen is a VA liquid crystal screen.

8. The four-sided bezel-free full screen of claim 1, wherein the connecting member is a double-sided adhesive tape.

9. The four-sided bezel-free full screen of claim 1, wherein a thickness of the decorative member ranges from 0.1 mm to 1 mm.

10. The four-sided bezel-free full screen of claim 1, wherein the decorative member is made of stainless steel.

11. A four-sided bezel-free full screen, comprising a display screen module, a decorative member, and a lower front frame;
wherein the display screen module comprises a display screen, a first end of the decorative member is fixed to a front surface of the display screen; and
a second end of the decorative piece is disposed on the lower front frame.

12. The four-sided bezel-free full screen of claim 11, wherein the full-screen further comprises a connecting member, and the first end of the decorative member is fixed to the front surface of the display screen by the connecting member.

13. The four-sided bezel-free full screen of claim 11, wherein the display screen comprises an upper polarizer, and the first end of the decorative member is fixed to the upper polarizer by the connecting member.

14. The four-sided bezel-free full screen of claim 11, wherein the full-screen further comprises a seal, the seal is disposed on the lower front frame and between the decorative member and the lower front frame.

15. The four-sided bezel-free full screen of claim 14, wherein a projection is provided on a side of the lower front frame close to the display screen, the second end of the decorative member is provided on the projection, and the seal is disposed on the projection and between the decorative member and the projection.

16. The four-sided bezel-free full screen of claim 14, wherein the seal is made of soft material.

17. The four-sided bezel-free full screen of claim 16, wherein the seal is made of sponge.

18. The four-sided bezel-free full screen of claim 11, wherein the display screen is a VA liquid crystal screen.

19. The four-sided bezel-free full screen of claim 12, wherein the connecting member is a double-sided adhesive tape.

20. The four-sided bezel-free full screen of claim 11, wherein a thickness of the decorative member ranges from 0.1 mm to 1 mm.
